# EUROPÄISCHE PATENTSCHRIFT

(11) **EP 3 235 035 B1**
(45) Veröffentlichungstag und Bekanntmachung des Hinweises auf die Patenterteilung: **31.10.2018**
(21) Anmeldenummer: 15816423.6
(22) Anmeldetag: 15.12.2015
(51) Int. Cl.: H01M 8/04089, F02D 9/10, F16K 1/22, H01M 8/04082

(54) **VENTILVORRICHTUNG IN EINEM KRAFTFAHRZEUG**
VALVE DEVICE IN A MOTOR VEHICLE
DISPOSITIF DE SOUPAPE DANS UN VÉHICULE AUTOMOBILE

(30) Priorität: 19.12.2014 DE 102014226728
(43) Veröffentlichungstag der Anmeldung: 25.10.2017
(73) Patentinhaber: Continental Automotive GmbH, 30165 Hannover (DE)
(72) Erfinder: MONTIGNY, Rainer Johannes, 65812 Bad Soden (DE); KOPP, Stefan, 63486 Bruchköbel (DE)
(86) Internationale Anmeldenummer: PCT/EP2015/079800
(87) Internationale Veröffentlichungsnummer: WO 2016/096863

(56) Entgegenhaltungen:
- EP-A2- 0 307 733
- DE-A1-102008 018 494
- US-A- 5 098 064

## Beschreibung

Die vorliegende Erfindung betrifft eine Ventilvorrichtung nach Anspruch 1. Gegenstand der Erfindung ist eine Ventilvorrichtung für eine Brennstoffzellenanordnung in einem Kraftfahrzeug mit einem in einem Gehäuse verlaufenden Strömungskanal, einer den Strömungsquerschnitt beeinflussenden aus einem Kunststoff bestehenden Klappe und einem die Klappe antreibenden Antrieb, wobei die Klappe an einer Welle befestigt und die Welle drehbar in dem Gehäuse gelagert ist, einem im Strömungskanal angeordneten Ventilsitz und einer an einem radial umlaufenden Rand der Klappe angeordneten Dichtung, die in Schließstellung der Klappe mit dem Ventilsitz in Kontakt steht, so dass die Welle die Klappe in einem Winkel durchdringt.
Derartige Ventilvorrichtungen sind aus der US 5098064 A und der EP 0307733 A2 bekannt und somit Stand der Technik. Aufgrund der strömenden Medien, z. B. Luft, müssen die Stellglieder eine hohe Dichtheit beim Verschließen des Strömungskanals ermöglichen. Zudem sollen sie eine gute Regelbarkeit des Strömungsquerschnitts des Strömungskanals und damit des Massenflusses des strömenden Mediums gewährleisten. Insbesondere hinsichtlich der Dichtheit sind herkömmliche Ventilanordnungen, wie sie als Drosselklappensteller bekannt sind, nachteilig, da die Dichtheitsanforderungen je nach Ausführungsart bei Brennstoffzellenanwendungen 10- bis 20-mal höher sind. Das hat zur Folge, dass solche Ventilvorrichtungen aufwändig gebaut und damit relativ kostenintensiv sind.
Für eine ausreichende Dichtheit beim verschließen des Strömungskanals ist ein Festsitz der Klappe an der Welle über die Lebensdauer eine grundlegende Voraussetzung. Dazu ist es bekannt die aus Kunststoff bestehende Klappe mit der Metallwelle zu verschrauben. Wird beim Anziehen der Schraubenkopf auf die Klappe gepresst, hat das zur Folge, dass der Kunststoff der Klappe infolge der Presskraft über die Zeit fließt und sich dadurch die Schraubverbindung lockern, und im schlimmsten Fall lösen kann. Um dies zu verhindern, wird in die Klappenbohrung für die Schraube eine Metallbuchse montiert, so dass die Kraft der Schraube von der Buchse und nicht vom Kunststoff der Klappe aufgenommen wird. Nachteilig hierbei ist die Aufwändige Montage der Buchse, verbunden mit den zusätzlichen Kosten.

Aufgabe der Erfindung ist es daher eine eingangs genannte Ventilvorrichtung zu schaffen, einfacher aufgebaut ist und gleichzeitig eine zuverlässige Schraubverbindung über die Lebensdauer der Ventilvorrichtung gewährleistet.

Gelöst wird die Aufgabe erfindungsgemäß dadurch, dass die Schraube einen Bund aufweist, dass die Klappenwelle eine Schraubenbohrung mit einem Absatz aufweist, dass der Bund der Schraube mit dem Absatz der Welle derart in Kontakt tritt, dass beim Festziehen der Schraube die Kraftübertragung vom Bund über den Absatz erfolgt.

Indem die Kraftübertragung nunmehr hauptsächlich von der Schraube direkt in die Welle erfolgt, wird die Pressung des Schraubenkopfes gegen die Kunststoffklappe erheblich reduziert. Aufgrund dieses stark reduzierten Krafteintrags in die Klappe werden das Fließen des Klappenmaterials und damit das Lösen der Schraubverbindung zuverlässig verhindert. Der Schraubenkopf presst die Kunststoffklappe nur noch gering gegen die Welle, was für einen zuverlässigen Festsitz der Klappe an der Welle ausreichend ist. Der Vorteil besteht darin, dass für die erfindungsgemäße Verbindung keine zusätzlichen Teile benötigt werden, was zu einer kostengünstigen Vorrichtung führt. An der Welle ist lediglich ein weiterer Bearbeitungsschritt zum Herstellen des Absatzes notwendig, während die Schraube einen zusätzlichen Bund aufweisen muss.

Um den Aufwand für die Herstellung des Bundes und des Absatzes weiter zu minimieren, hat es sich als vorteilhaft erwiesen, die Tiefe bis zum Absatz kleiner als den Wellenradius zu wählen.

Die Schwächung der Welle wird dabei auf ein Minimum reduziert, wenn die Tiefe des Absatzes das 0,2- bis 0,5-fache des Wellenradius beträgt.

An einem Ausführungsbeispiel wird die Erfindung näher beschrieben. Es zeigen in
- Fig. 1: eine erfindungsgemäße Ventilvorrichtung und
- Fig. 2: eine vergrößerte Darstellung der Verschraubung.

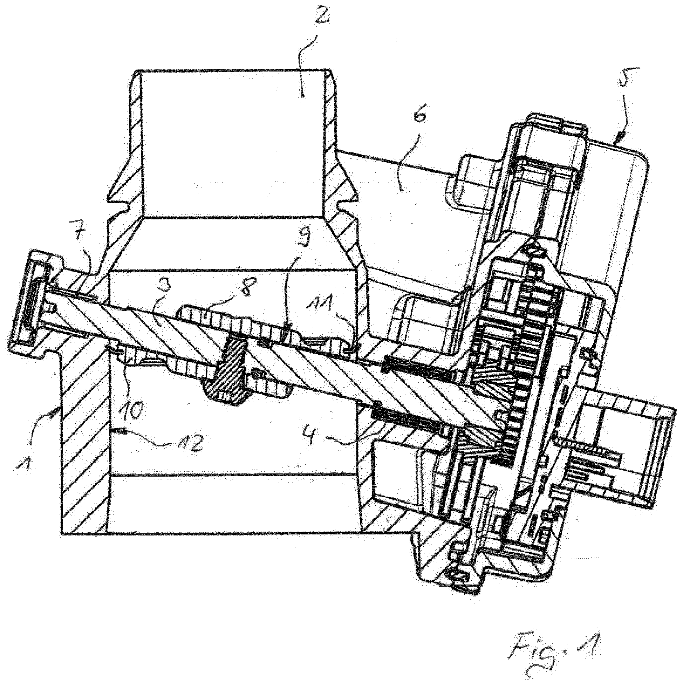

Die Ventilvorrichtung für ein Kraftfahrzeug in Figur 1 besteht aus einem Gehäuse 1, mit einem in dem Gehäuse angeordneten Strömungskanal 2 zum Durchströmen eines Fluids. Im vorliegenden Fall wird ein Luftstrom durch die Ventilvorrichtung geregelt. Im Strömungskanal 2 ist eine Welle 3 angeordnet, die zu beiden Seiten im Gehäuse 1 gelagert ist. Das erste Lager 4 befindet sich auf der Seite des Gehäuses 1 an der ein Getriebe 5 angeordnet ist. Das Getriebe 5 ist ausgangsseitig mit der Welle 3 verbunden und eingangsseitig mit einem nicht dargestellten Elektromotor, der in einer separaten Kammer 6 des Gehäuses 1 untergebracht ist. Das zweite Lager 7 für die Welle 3 befindet sich auf der dem Getriebe 5 gegenüberliegenden Seite des Strömungskanals 2. An der Welle 3 ist eine Klappe 8 angeordnet, welche eine Bohrung 9 besitzt, durch die die Welle 3 verläuft. Zur Befestigung auf der Welle 3 ist die Klappe 8 mit der Welle 3 mit einer Schraube 13 verschraubt. Die Klappe 8 besitzt weiter einen radial umlaufenden Rand 10, an dem eine Dichtung 11 angeordnet ist. In der gezeigten Darstellung befindet sich die Klappe 8 in Schließstellung, so dass die Dichtung 11 mit dem als Ventilsitz 12 wirkenden Bereich des Strömungskanals 2 zusammenwirkt und den Strömungskanal 2 vollständig verschließt.

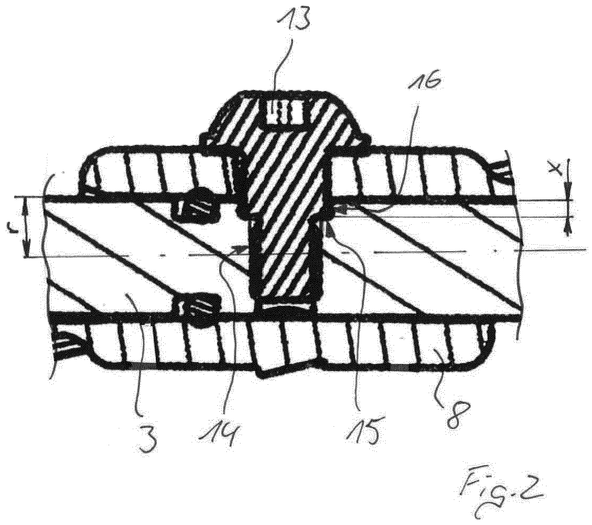

Figur 2 zeigt die Welle 3 mit einem Teil der Klappe 8. Die Welle 3besitzt eine Bohrung 14 für die Schraube 13, wobei die Bohrung 14 einen Absatz 15 aufweist. Die Schraube 13 besitzt einen Bund 16, der im montierten Zustand am Absatz 15 anliegt. Der Schraubenkopf 17 drückt dadurch so gering gegen die Klappe 8, dass die Klappe zuverlässig gehalten, ein Fließen des Kunststoffes aufgrund zu hoher Flächenpressung jedoch vermieden wird. Der Absatz 15 besitzt eine Tiefe x von der Mantelfläche der Welle 3, die ca. 0,3 des Wellenradius r beträgt.

## Patentansprüche

1. Ventilvorrichtung für eine Brennstoffzellenanordnung in einem Kraftfahrzeug mit einem in einem Gehäuse verlaufenden Strömungskanal, einer den Strömungsquerschnitt beeinflussenden aus einem Kunststoff bestehenden Klappe und einem die Klappe antreibenden Antrieb, wobei die Klappe an einer Welle befestigt und die Welle drehbar in dem Gehäuse gelagert ist, einem im Strömungskanal angeordneten Ventilsitz und einer an einem radial umlaufenden Rand der Klappe angeordneten Dichtung, die in Schließstellung der Klappe mit dem Ventilsitz in Kontakt steht und die Welle die Klappe in einem Winkel durchdringt, **dadurch gekennzeichnet, dass** eine einen Bund (16) aufweisende Schraube (13)angeordnet ist, mit der die Klappe mit der Welle verschraubt ist, dass die Welle (3) eine Schraubenbohrung (14) mit einem Absatz (15) aufweist, der beginnend am Außenumfang der Welle in einer Tiefe x angeordnet ist, dass der Bund (16) der Schraube (13) mit dem Absatz (15) der Welle (3) derart in Kontakt tritt, dass beim Festziehen der Schraube (13) die Kraftübertragung vom Bund (16) über den Absatz (15) erfolgt.

2. Ventilvorrichtung nach Anspruch 1, **dadurch gekennzeichnet, dass** Tiefe x bis zum Absatz (15) kleiner als der Wellenradius r ist.

3. Ventilvorrichtung nach Anspruch 2, **dadurch gekennzeichnet, dass** die Tiefe x des Absatzes (15) das 0,2- bis 0,5-fache des Wellenradius r beträgt.

## Claims

1. Valve device for a fuel cell arrangement in a motor vehicle, having a flow channel which extends in a housing, having a flap which influences the flow cross section and is composes of a plastic, and having a drive which drives the flap, wherein the flap is fastened to a shaft and the shaft is mounted rotatably in the housing, having a valve seat which is arranged in the flow channel and having a seal which is arranged on a radially circumferential edge of the flap and is in contact with the valve seat in the closed position of the flap, and the shaft penetrating the flap at an angle, **characterized in that** there is arranged a screw (13) which has a collar (16) and by way of which the flap is screwed to the shaft, **in that** the shaft (3) has a screw bore (14) with a shoulder (15) which is arranged at a depth x starting at the outer circumference of the shaft, **in that** the collar (16) of the screw (13) comes into contact with the shoulder (15) of the shaft (3) in such a manner that, when the screw (13) is tightened firmly, the transmission of force from the collar (16) takes place via the shoulder (15).

2. Valve device according to Claim 1, **characterized in that** the depth x to the shoulder (15) is smaller than the shaft radius r.

3. Valve device according to Claim 2, **characterized in that** the depth x of the shoulder (15) is 0.2 to 0.5 times the shaft radius r.

## Revendications

1. Dispositif de soupape pour un agencement de pile à combustible dans un véhicule automobile, comprenant un canal d'écoulement s'étendant dans un boîtier, un clapet en plastique influençant la section transversale d'écoulement et un entraînement entraînant le clapet, le clapet étant fixé sur un arbre et l'arbre étant supporté de manière à pouvoir tourner dans le boîtier, un siège de soupape disposé dans le canal d'écoulement et un joint d'étanchéité disposé au niveau d'un bord radialement périphérique du clapet, qui est en contact avec le siège de soupape dans la position de fermeture du clapet, et l'arbre traversant le clapet suivant un certain angle, **caractérisé en ce qu'**il est prévu une vis (13) présentant un décrochement (16), avec laquelle le clapet est vissé à l'arbre, **en ce que** l'arbre (3) présente un alésage de vis (14) avec un épaulement (15) qui est disposé à une profondeur x à partir du niveau de la périphérie extérieure de l'arbre, **en ce que** le décrochement (16) de la vis (13) vient en contact avec l'épaulement (15) de l'arbre (3) de telle sorte que lors du vissage de la vis (13), le transfert de force s'effectue depuis le décrochement (16) par le biais de l'épaulement (15).

2. Dispositif de soupape selon la revendication 1, **caractérisé en ce que** la profondeur x jusqu'à l'épaulement (15) est inférieure au rayon r de l'arbre.

3. Dispositif de soupape selon la revendication 2, **caractérisé en ce que** la profondeur x de l'épaulement (15) vaut 0,2 à 0,5 fois le rayon r de l'arbre.
